# EUROPEAN PATENT APPLICATION

(11) **EP 2 575 030 A2**
(43) Date of publication of application: **03.04.2013**
(21) Application number: 12186069.6
(22) Date of filing: 26.09.2012
(51) Int. Cl.: G06F 3/12

(54) **Printing control apparatus, certification server, image processing system, printing control method, and printing control program**

(30) Priority: 28.09.2011 JP 2011212188
(71) Applicant: Seiko Epson Corporation, Shinjuku-ku, Tokyo 163-0811 (JP)
(72) Inventor: Takagi, Toshimitsu, Nagano, 392-8502 (JP)
(74) Representative: HOFFMANN EITLE

(57) **Abstract**

A multifunction peripheral printer (MFP) includes a printing environment settings unit that performs settings that contribute to a reduction in environmental load, a certification request unit that requests, from a certification server, certification concerning whether the set printing corresponds to eco-printing that is environmentally friendly print, a certification result reception unit that receives a certification result from the certification server, a logo image application unit that applies a logo image indicating that printing has been executed by the eco-printing when the set printing is certified as the eco-printing, and a printing control unit that prints an image to which the logo image is applied.

## Description

### BACKGROUND

### 1. Technical Field

The present invention relates to a printing control apparatus that performs control of environmentally friendly printing taking the environment into consideration, a certification server, an image processing system, a printing control method, and a printing control program.

### 2. Related Art

In recent years, in a printing apparatus such as a printer, or a multifunction peripheral printer (MFP), a function of environmentally friendly printing (hereinafter, referred to as "eco-printing") taking the environment into consideration has been required in order to reduce a load to be imposed on the global environment. As examples of environmentally friendly printing, energy-saving printing that suppresses power consumption at the time of printing or stand-by, printing that uses a recording material with a low environmental load such as ink manufactured using soybeans as a raw material, printing that suppresses the environmental load of a printing medium such as the use of recycled paper or allocation printing, and the like have been known.

In addition, in order to further develop an effect of reducing the loads imposed on the environment by the above-described environmentally friendly printing, there is a need for enabling more users to use the function of environmentally friendly print.

Therefore, in JP-A-2007-283719, a printer in which data is read from an IC tag mounted in environmentally friendly consumable supplies, the read data is determined, and a logo is printed in a case of printing using the environmentally friendly consumable supplies has been disclosed. Therefore, by informing a user that the printed matter of a printed result is obtained by printing using the environmentally friendly consumable supplies, the awareness of the user with respect to environmental measures may be improved.

However, demands for environmental measures have increased every year, and the criteria according to which the logo for environmentally friendly printing should be applied are not consistent. For this reason, it is considered that the certification criteria of environmentally friendly printing may be constantly changed to more stringent criteria. When the certification criteria are changed in this manner, in JP-A-2007-283719, the logo is applied by a process in the printer so that an operation for enabling correspondence with changes in the certification criteria must be carried out for each printer, and therefore it is difficult to reliably and flexibly correspond to the changes in the certification criteria. For this reason, when new certification criteria do not correspond to environmentally friendly printing after a change, the logo is erroneously printed by being subjected to a process according to the certification criteria before the change, and therefore there is a possibility of a case where a user who views the printed matter of the erroneously printed result falsely recognizes that the printed matter of the erroneously printed result is a printed result by environmentally friendly printing even though the printed matter of the erroneously printed result is not a printed result by environmentally friendly printing.

### SUMMARY

The invention can be realized in the following forms or application examples.

### Application Example 1

According to Application Example 1, there is provided a printing control apparatus that controls printing of an image, including: a settings unit that performs settings that contribute to a reduction in environmental load; a certification request unit that transmits a certification request for requesting certification of environmentally friendly printing satisfying predetermined environmental performance with respect to printing according to the settings of the settings unit; a certification result reception unit that receives a certification result corresponding to the certification request; an application unit that applies, to the image, an application image indicating that printing has been executed by environmentally friendly printing when printing according to the settings of the settings unit is certified as environmentally friendly printing; and a printing control unit that performs a control of printing an image to which the application image is applied, according to the settings of the settings unit.

In the printing control apparatus, the certification request of environmentally friendly printing may be transmitted, and an image to which the application image is applied may be printed as a result of the certification corresponding to the transmitted certification request when the printing according to the settings of the settings unit is certified as environmentally friendly printing. When the application image is printed as a printed result, a user may know that the printed result is a result of environmentally friendly printing. In addition, certification of environmentally friendly printing is requested from the outside, so that a request destination is made to correspond with new certification criteria even when the certification criteria are changed, and thereby it is possible to reliably and flexibly correspond to new certification criteria without requiring an operation for enabling correspondence with the new certification criteria in the printing control apparatus. Accordingly, when the application image is erroneously printed in a case of not satisfying an the environmental performance of the new certification criteria, it is possible to accurately provide notification that a printed result is a printed result by environmentally friendly printing without the possibility of a case where a user who views the printed matter of the erroneously printed result falsely recognizes that the printed matter of the erroneously printed result is a printed result by environmentally friendly printing.

### Application Example 2

In the printing control apparatus according to Application Example 1, the application unit may receive the image data of the application image when the printing according to the settings of the settings unit is certified as environmentally friendly printing, and apply the application image of the received image data to the image.

According to this configuration, the printing control apparatus may printing an image to which the application is applied by applying the application image of the received image data.

### Application Example 3

In the printing control apparatus according to Application Example 1, the application unit may request application of the application image by transmitting the image data of an image to a certification request destination, and receive the image data of an image to which the application image is applied according to the request of the application of the application image.

According to this configuration, in the printing control apparatus, an image to which the application image is applied may be printed by performing a process of applying to the certification request destination without applying the application image.

### Application Example 4

According to Application Example 4, there is provided a certification server, including: a certification request reception unit that receives a certification request for requesting certification of environmentally friendly printing satisfying a predetermined environmental performance with respect to printing in which settings contributing to a reduction in environmental load are designated; a storage unit that stores certification criteria data for regulating certification criteria of environmentally friendly printing; a certification unit that determines whether printing according to the designated settings corresponds to environmentally friendly printing, based on the certification criteria data, and certifies printing according to the designated settings as environmentally friendly printing when the printing according to the designated settings corresponds to environmentally friendly printing; and a certification result transmission unit that transmits a certification result obtained by the certification unit.

According to the certification server, even when the certification criteria of environmentally friendly printing are changed, only by enabling correspondence with the certification criteria data stored in the storage unit, the changed certification criteria may be made to correspond with new certification criteria, and therefore certification concerning whether printing of settings in the certification request is environmentally friendly printing may be performed according to the new certification criteria.

### Application Example 5

The certification server according to Application Example 4, the certification criteria data may be updatable.

According to this configuration, the certification criteria data is updated, and therefore the updated certification criteria data may be made to correspond with new certification criteria.

### Application Example 6

According to Application Example 6, there is provided an image processing system, including: a printing control apparatus that controls printing of an image; and a certification server that performs certification of environmentally friendly printing satisfying a predetermined environmental performance, wherein the printing control apparatus includes a settings unit that performs settings that contribute to a reduction in environmental load, a certification request unit that transmits, to the certification server, a certification request for requesting certification of environmentally friendly printing with respect to printing according to the settings of the settings unit, a certification result reception unit that receives a certification result corresponding to the certification request from the certification server, an application unit that applies, to the image, an application image indicating that printing has been executed by environmentally friendly printing when the printing according to the settings of the settings unit is certified as environmentally friendly printing, and a printing control unit that performs control of printing an image to which the application image is applied, according to the settings of the settings unit, and wherein the certification server includes a certification request reception unit that receives the certification request from the printing control apparatus, a storage unit that stores certification criteria data for regulating certification criteria of environmentally friendly printing, a certification unit that determines whether printing according to the designated settings corresponds to environmentally friendly printing, based on the certification criteria data, and certifies the printing according to the designated settings as environmentally friendly printing when the printing according to the designated settings corresponds to environmentally friendly printing, and a certification result transmission unit that transmits a certification result obtained by the certification unit to the printing control apparatus.

According to the image processing system, certification concerning whether the printing according to the set settings contents corresponds to environmentally friendly printing satisfying the predetermined environmental performance may be requested from the certification server, and an image to which the application image is applied may be printed when the printing according to the set settings contents is certified as environmentally friendly printing by the certification server. The certification is not performed by the printing control apparatus, and the certification is requested from the certification server, so that the certification server is made to correspond with new criteria even when the certification criteria are changed, and thereby it is possible to reliably and flexibly correspond to new certification criteria without requiring an operation for enabling correspondence with new certification criteria in the printing control apparatus. Accordingly, when the application image is erroneously printed in a case of not satisfying new environmental criteria, it is possible to accurately provide notification that a printed result is a printed result by environmentally friendly printing satisfying a predetermined environmental performance without the possibility of a case where a user who views the printed matter of the erroneously printed result falsely recognizes that the printed matter of the erroneously printed result is a printed result by environmentally friendly printing.

### Application Example 7

According to Application Example 7, there is provided an image processing system, including: a printing apparatus; a printing control apparatus that controls printing of an image by the printing apparatus; and a certification server that performs certification of environmentally friendly printing satisfying a predetermined environmental performance, wherein the printing control apparatus includes a settings unit that performs settings that contribute to a reduction in environmental load, and a certification request unit that transmits, to the certification server, a certification request for requesting certification of environmentally friendly printing and a printing operation of the image with respect to printing according to the settings of the settings unit, and wherein the certification server includes a certification request reception unit that receives the certification request from the printing control apparatus, a storage unit that stores certification criteria data for regulating certification criteria of environmentally friendly printing, a certification unit that determines whether printing according to the designated settings corresponds to environmentally friendly printing, based on the certification criteria data, and certifies the printing according to the designated settings as environmentally friendly printing when the printing according to the designated settings corresponds to environmentally friendly printing, an application unit that applies, to the image, an application image indicating that printing has been executed by environmentally friendly printing when the printing according to the settings of the settings unit is certified as environmentally friendly printing, and a transmission unit that transmits, to the printing apparatus, the printing operation of an image to which the application image is applied.

In the printing control apparatus according to the image processing system, certification concerning whether the printing according to the set settings contents corresponds to environmentally friendly printing satisfying the predetermined environmental performance may be requested from the certification server, and the certification server enables the printing apparatus to printing an image to which the application image is applied when the printing according to the set settings contents is certified as environmentally friendly printing by the certification server. Accordingly, when the application image is erroneously printed in a case of not satisfying new environmental criteria, it is possible to accurately provide notification that a printed result is a printed result by environmentally friendly printing satisfying a predetermined environmental performance without the possibility of a case where a user who views the printed matter of the erroneously printed result falsely recognizes that the printed matter of the erroneously printed result is a printed result by environmentally friendly printing.

### Application Example 8

According to Application Example 8, there is provided a printing control method that controls printing of an image, including: performing settings that contribute to a reduction in environmental load; transmitting a certification request for requesting certification of environmentally friendly printing satisfying a predetermined environmental performance with respect to printing according to the settings of the settings unit; receiving a certification result corresponding to the certification request; applying, to the image, an application image indicating that printing has been executed by environmentally friendly printing when the printing according to the settings of the settings unit is certified as environmentally friendly printing; and performing control of printing an image to which the application image is applied, according to the settings contributing to the reduction in the environmental load.

### Application Example 9

According to Application Example 9, there is provided a printing control program for controlling printing of an image, enabling a computer to function as: a settings unit that performs settings that contribute to a reduction in environmental load; a certification request unit that transmits a certification request for requesting certification of environmentally friendly printing satisfying a predetermined environmental performance with respect to printing according to the settings of the settings unit; a certification result reception unit that receives a certification result corresponding to the certification request; an application unit that applies, to the image, an application image indicating that printing has been executed by environmentally friendly printing when the printing according to the settings of the settings unit is certified as environmentally friendly printing; and a printing control unit that performs control of printing an image to which the application image is applied, according to the settings of the settings unit.

According to the printing control method and the printing control program, when the application image is erroneously printed in a case of not satisfying new certification criteria, it is possible to accurately provide notification that a printed result is a printed result by environmentally friendly printing satisfying a predetermined environmental performance without the possibility of a case where a user who views the printed matter of the erroneously printed result falsely recognizes that the printed matter of the erroneously printed result is a printed result by environmentally friendly printing.

### BRIEF DESCRIPTION OF THE DRAWINGS

The invention will be described with reference to the accompanying drawings, wherein like numbers reference like elements.

Fig. 1 is a drawing showing a schematic configuration of an image processing system according to a first embodiment of the invention;

Fig. 2 is a functional block diagram showing a controller of a multifunction peripheral printer (MFP);

Fig. 3 is a drawing showing an example of printing environment settings;

Fig. 4 is a functional block diagram showing a certification server;

Fig. 5 is a flowchart showing a process of an image processing system;

Fig. 6 is a drawing showing an example of a printed result of a logo image;

Fig. 7 is a flowchart showing a process of an image processing system according to a second embodiment of the invention;

Fig. 8 is a flowchart showing a process of an image processing system according to a third embodiment of the invention;

Fig. 9 is a drawing showing a schematic configuration of an image processing system according to a fourth embodiment of the invention;

Fig. 10 is a drawing showing a schematic configuration of an image processing system according to a fifth embodiment of the invention; and

Fig. 11 is a flowchart showing a process of an image processing system according to a fifth embodiment of the invention.

### DESCRIPTION OF EXEMPLARY EMBODIMENTS

Hereinafter, embodiments of the invention will be described with reference to the accompanying drawings.

### First embodiment

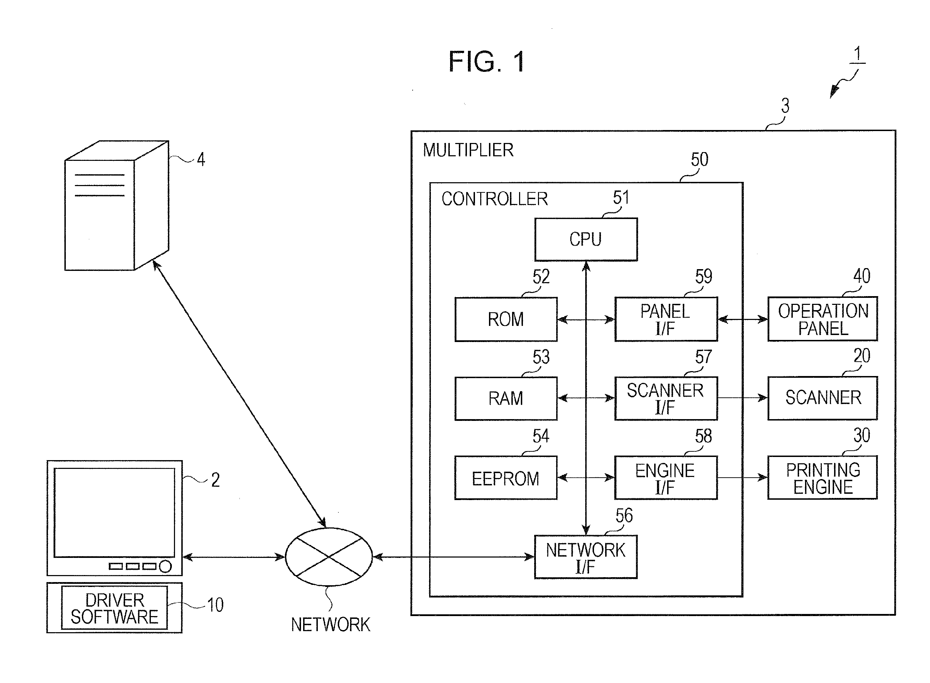

Fig. 1 is a drawing showing a schematic configuration of an image processing system according to a first embodiment of the invention. As shown in Fig. 1, an image processing system 1 includes an external computer 2, a multifunction peripheral printer 3 (MFP), and a certification server 4. These devices are respectively connected via a network such as a LAN (local area network) so as to be capable of communicating data with each other. In addition, in Fig. 1, the image processing system 1 including the single multiplier 3 and the external computer 2 is shown, but a system including a plurality of multipliers 3 may be used, and a system including a plurality of external computers 2 may be used.

The external computer 2 is, for example, a general-purpose personal computer, and a driver software 10 for controlling the MFP 3 from the outside is installed in the external computer 2. The driver software 10 designates printing settings in accordance with a user operation to an input device (not shown) such as a keyboard or a mouse, and transmits a printing job including settings information of the designated printing settings, data of an image to be printed, and a printing instruction to the MFP 3.

The certification server 4 is a server for performing certification of eco-printing that is environmentally friendly printing taking the environment into consideration with respect to printing performed by the MFP 3. Detailed description will be made below, but the certification server 4 executes processes such as receiving a request of the certification of eco-printing from the MFP 3, performing the certification of the eco-printing, transmitting a certification result to the MFP 3 that is a request source, and the like.

The MFP 3 is an example of a printing control apparatus, and is a multifunction printer that has a plurality of functions such as a printer function, a copy function, a scanner function, and the like. The MFP 3 includes a scanner 20, a printing engine 30, an operation panel 40, and a controller 50.

The scanner 20 is a hardware unit that reads a document set on a document table and generates image data of the draft, and includes a carriage mounting an imaging device, a scanning mechanism that scans the carriage along the document table, or the like.

Scan data generated by reading the draft of the scanner 20 is delivered to the controller 50. In addition, as the scanner 20, a configuration in which an ADF (auto document feeder) that automatically sends a plurality of documents to the draft table one by one is provided when a plurality of documents are set may be used.

The printing engine 30 is a hardware unit that prints images such as image data included in a printing job received from the external computer 2 or scan data to a printing medium such as printing paper. The printing engine 30 according to the present embodiment executes printing by forming an electrophotographic image, and includes an electrification unit, an exposure unit, a photoreceptor, a developing unit, a transcription unit, a fixing unit, and a toner cartridge, and a control unit for controlling operations these configurations. The photoreceptor is a drum that has a cylindrical conductive substrate and a photosensitive layer formed on the outer circumference surface of the conductive substrate, and rotatable around a central axis. The photoreceptor is electrified with the electrification unit, and then a latent image is formed by the exposure unit and is developed using a toner by the developing unit. The developed toner image is transcribed to the printing medium such as printing paper by the transcription unit. The fixing unit includes a fixing roller whose surface is covered with an elastic body such as rubber, a driving motor for rotating the fixing roller, a heater for heating the fixing roller, and the like, and an image is formed on the printing medium by fixing the transcribed toner image to the printing medium by the heated fixing roller.

The operation panel 40 is a panel that is provided on an outer surface of the MFP 3 so as to operate the MFP 3 by a user standing in front of the MFP 3, and includes a touch panel. The user may operate according to an image displayed on the touch panel, input a variety of instructions to the MFP 3, or change a variety of settings of the MFP 3. In addition, as the operation panel 40, a configuration of including a display panel such as LCD (liquid crystal display), which is not the touch panel and a variety of operation buttons may be used.

The controller 50 is a control device that controls an operation of each portion of the MFP 3, and is a portion corresponding to a printing control apparatus. The controller 50 includes a CPU 51, a ROM 52, a RAM 53, an EEPROM 54, a network I/F 56, a scanner I/F 57, an engine I/F 58, and a panel I/F 59. In addition, each of these configurations is connected via an internal bus so as to communicate data with each other.

The CPU 51 is a main control device of the controller 50, and controls each configuration of the MFP 3 by performing a variety of programs stored in the ROM 52, using the RAM 53 as an operation area or the like. The CPU 51 converts, for example, image data to be printed into a format which can be processed by the printing engine 30, and performs a variety of processes in the MFP 3 such as a process of controlling the printing engine 30 such as delivering to the printing engine 30 together with a printing instruction, a process of controlling the operation panel 40, a process of controlling the scanner 20, and the like. By performing the processes by the CPU 51, a variety of functions such as a printer function of the MFP 3, a copy function, a scanner function, and the like may be realized.

The network I/F 56 is an interface portion that connects to a network, and performs a process of controlling communication with a connection destination. The MFP 3 is connected so as to communicate with the external computer 2 by being connected to the network via the network I/F 56.

The panel I/F 59 is an interface portion with respect to the operation panel 40, and performs a process of outputting a display signal of the touch panel to the operation panel 40 by a control of the CPU 51, a process of receiving an input of an operation signal from the operation panel 40, or the like.

The scanner I/F 57 is an interface portion with the controller 50 and the scanner 20, and performs a process of issuing a read instruction to the scanner 20 by a control of the CPU 51, a process of receiving scan data of the image read by the scanner 20, or the like.

The engine I/F 58 is an interface portion with the controller 50 and the printing engine 30, and performs a process of outputting image data to be printed, which is stored in the RAM 53, to the printing engine 30 as data having a format which can be processed by the printing engine 30, by reading the image data to perform a predetermined process on the image data when executing printing in the printing engine 30. In addition, the engine I/F 58 includes a memory that temporarily stores data, a decompression unit, and a screen processing unit, and performs decompression of compressed data, a screen process for converting into data of dots, or the like with respect to the image data read from the RAM 53. The engine I/F 58 having these functions is specifically configured with an ASIC (application specific integrated circuit).

Here, the MFP 3 according to the present embodiment is configured so as to enable printing based on a printing settings contributing to a reduction in an effect (environmental load) imposed on the environment in association with environmental issues, such as energy-saving printing for suppressing power consumption at the time of printing or stand-by, printing for using an environmental toner with a low environmental load, printing for suppressing environmental load caused by recording material such as toner-save, printing for suppressing environmental load caused by printing medium such as the use of recycled paper or allocation printing, or the like. In addition, in the MFP 3 according to the present embodiment, a user may arbitrarily set, from the operation panel 40 or the external computer 2, multiple items concerning a power-saving control method, a printing method, and printing settings such as a type of a toner used in the print, and executes eco-printing contributing to a reduction in the environmental load according to contents of each set item.

In addition, when executing print, the MFP 3 according to the present embodiment requests, from the certification server 4, certification concerning whether printing according to the contents of the settings is an eco-printing, and prints an image of a predetermined logo by adding to an image to be printed when receiving the certification. The logo is to inform a user viewing printed matter of a printed result of the fact that the printed matter is a printed result by the eco-printing. As the logo, a mark to enable a user viewing the mark to recollect a global environment, a predetermined mark that is stipulated in organizations to promote environmental protection, third-party certification organizations, or the like may be used.

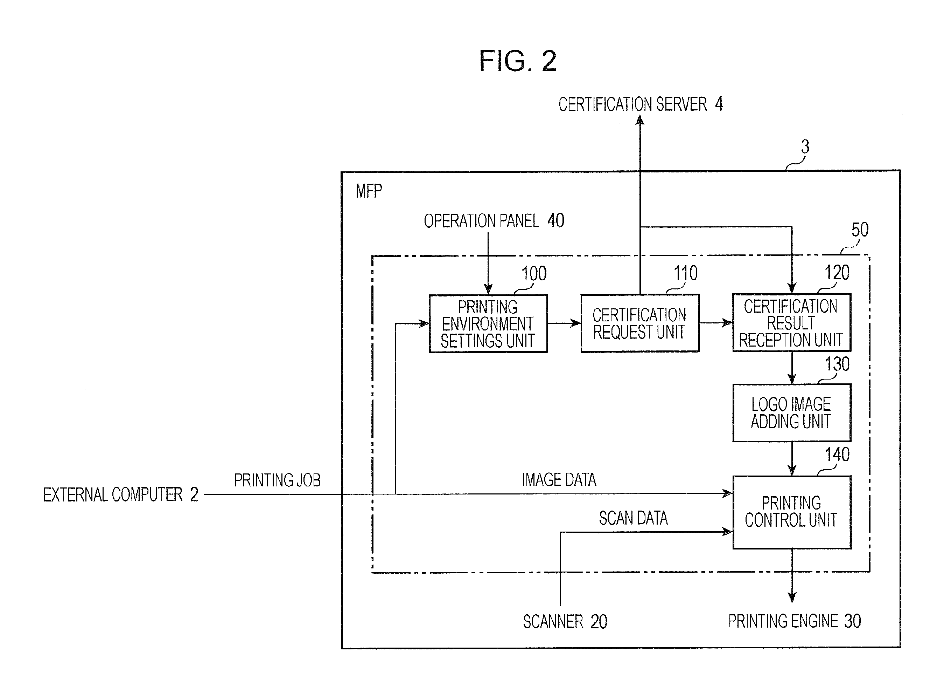

Next, a configuration of the MFP 3 realizing the functions of the above-described eco-printing will be described. Fig. 2 is a functional block diagram showing the controller 50 of the MFP 3. As shown in Fig. 2, the controller 50 includes a printing environment settings unit 100 (settings unit), a certification request unit 110, a certification result reception unit 120, a logo image application unit 130 (adding unit), and a printing control unit 140.

The printing environment settings unit 100 performs a settings contributing to a reduction in environmental load based on designation from a user, or the like, and determines settings contents with respect to each settings item which will be described below.

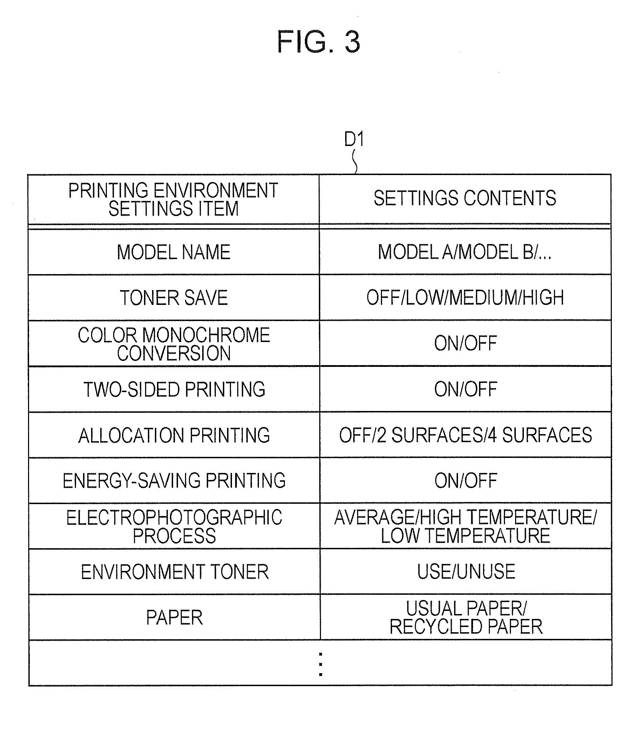

The settings items (about a printing environment) contributing to the reduction in the environmental load of the MFP 3 will be described. Fig. 3 is a drawing showing an example of settings items with respect to the printing environment of the MFP 3. As shown in Fig. 3, in the settings items of the printing environment, a model name of the MFP 3, toner save, color monochrome conversion, two-sided print, allocation print, energy-saving print, a fixing temperature in an electrophotographic process, information concerning whether an environmental toner is used or not, a paper type, and the like are included. In addition, the settings items contributing to the reduction in the environmental load are not limited thereto, and may include, for example, settings concerning the eco-printing such as start-up printing for reducing a time until printing is made possible at the time of starting-up, printing time shift for printing while avoiding a time zone in which electric power quantity is increased, nighttime batch printing for executing printing in the nighttime, a sleep mode, a forced sleep time up to transition to a sleep mode, and the like. In addition, with regard to the settings of the energy-saving print, more specific settings items for realizing the energy-saving, for example, a reduction in an operation clock of the controller 50, a reduction in a printing speed by the printing engine 30, the interruption of power supply to a variety of interfaces at the time of printing, brightness control of the operation panel 40 and an indicator, and the like may be set.

With regard to the above-described each settings item, arbitrary settings contents with respect to desired settings items of a user are designated by operating the operation panel 40 of the MFP 3 by the user. For example, in a case of the toner save, the user may designate settings contents of an arbitrary level from among a plurality of levels such as OFF/low/medium/high. Data of the designated settings contents is stored in a memory area of a non-volatile memory which can be determined in advance, such as EEPROM 54.

In addition, the above-described settings contents may be designated by operating, by a user, an input device such as a mouse or a keyboard which is connected to the external computer 2. The data of the designated settings contents is transmitted to the MFP 3 from the external computer 2, and stored in a predetermined memory area such as EEPROM 54.

The certification request unit 110 performs a process of requesting, from the certification server 4, certification concerning whether printing of the settings contents set by the printing environment settings unit 100 corresponds to the eco-printing. In the present embodiment, the certification is requested from the certification server 4 by transmitting settings data indicating the settings contents to the certification server 4 together with the certification request.

The certification result reception unit 120 receives a result of the requested certification from the certification server 4.

The logo image application unit 130 performs a process of applying a predetermined logo image to an image to be printed according to the certification result from the certification server 4. In the present embodiment, when the printing according to the settings contents of the MFP 3 is certified as the eco-printing, the logo image application unit 130 applies the logo image to the image to be printed as a printing job.

The printing control unit 140 controls printing by controlling operations of the printing engine 30, the operation panel 40, the scanner 20, a variety of interfaces, and the like according to the settings contents determined by the printing environment settings unit 100. For example, when a fixing temperature is set as "low", the printing control unit 140 performs a process of suppressing power consumption of the printing engine 30 by issuing an instruction of reducing a temperature of the fixing unit to a control unit of the printing engine 30.

In addition, when performing printing by a printer function or a copy function, the printing control unit 140 enables the printing engine 30 to execute printing according to the settings of the printing environment settings unit 100. For this reason, the printing control unit 140 generates image data corresponding to the settings contents such as allocation printing or two-sided printing from image data to be printed or scan data which are included in the printing job, and delivers, to the printing engine 30, the generated image data as a format which can be processed by the printing engine 30. Due to this, printing according to the settings of the printing environment settings unit 100 has been executed. In addition, when the logo image is applied to the image to be printed by the logo image application unit 130, the printing control unit 140 delivers, to the printing engine 30, data of an image to which the logo image is applied.

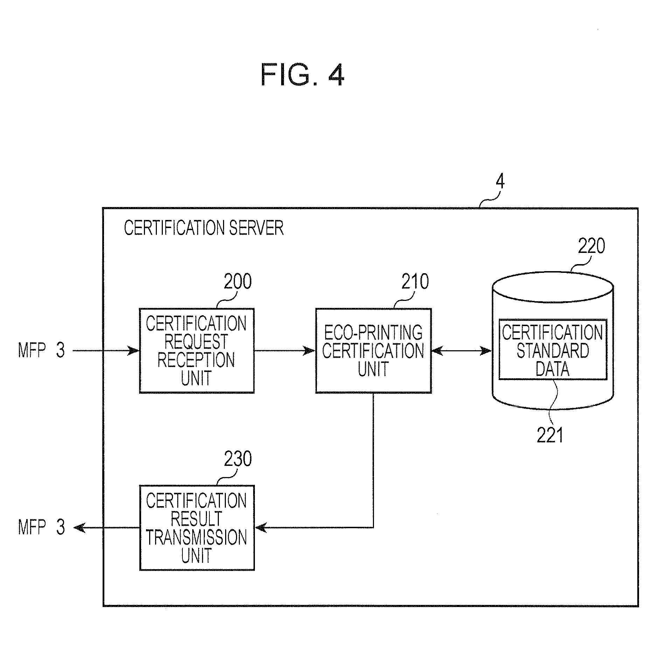

Next, a configuration of the certification server 4 will be described. Fig. 4 is a functional block diagram showing the certification server 4. As shown in Fig. 4, the certification server 4 includes a certification request reception unit 200, an eco-printing certification unit 210 (certification unit), a certification criteria database unit 220 (storage unit), and a certification result transmission unit 230.

The certification request reception unit 200 receives a certification request from the MFP 3 via the network, and acquires settings data of the printing requesting certification.

The eco-printing certification unit 210 determines whether printing according to settings contents of the settings data corresponds to the eco-printing, and performs a certification process of the eco-printing based on the determination result. The certification process is performed according to certification criteria data 221 that is stored in advance in the certification criteria database unit 220.

The certification criteria data 221 is data used to determine whether printing according to settings contents of a printing environment satisfies certification criteria of the eco-printing satisfying a predetermined environmental performance with respect to energy-saving or resource-saving such as a toner or paper. The certification criteria data 221 is data that defines organization of the settings contents corresponding to the eco-printing with respect to the above-described multiple settings items. The eco-printing certification unit 210 certifies printing of settings contents requesting certification as the eco-printing with reference to the certification criteria data 221 of the certification criteria database unit 220 when the settings contents of the printing requesting the certification are settings contents corresponding to the eco-printing. In addition, a method of the certification is not limited thereto, and certification concerning whether a printing corresponds to the eco-printing according to a calculated evaluation point about, for example, power consumption or the like from the settings contents of the multiple settings items may be performed. In addition, since there is a case in which a contribution degree which contributes to a reduction in environmental load is different to correspond to a maker or a model of the MFP 3 or improvement in hardware or software associated with the MFP 3, the certification criteria data 221 includes the maker or the model of the MFP 3, or version information of hardware or software associated with the MFP 3, so that certification concerning whether a printing corresponds to the eco-printing according to these information may be performed.

In addition, when certification criteria of the eco-printing is changed to new criteria, the certification criteria data 221 of the certification criteria database unit 220 is changed to data corresponding to the new criteria by a manager, or the like of the system. Due to this, certification by the eco-printing certification unit 210 is managed in a state corresponding to the new certification criteria after the change.

A result certified by the eco-printing certification unit 210 is transmitted to the MFP 3 that is a request source, by the certification result transmission unit 230. Due to this, when printing of settings contents set in the MFP 3 is the eco-printing, the MFP 3 receives certification of the eco-printing from the certification server 4, and prints an image to which a logo image (application image) indicating that the printing executed by the MFP 3 corresponds to the eco-printing is applied.

As described above, the image processing system 1 according to the present embodiment requests, from the certification server 4, certification concerning whether the printing executed by the MFP 3 corresponds to the eco-printing, and when receiving the certification that the printing executed by the MFP 3 corresponds to the eco-printing from the certification server 4, applies the logo image by a process of the MFP 3 side thereby printing an image to which the logo image is applied. Next, a process performed by the MFP 3 and the certification server 4 in the image processing system 1 will be described in detail according to a corresponding flowchart.

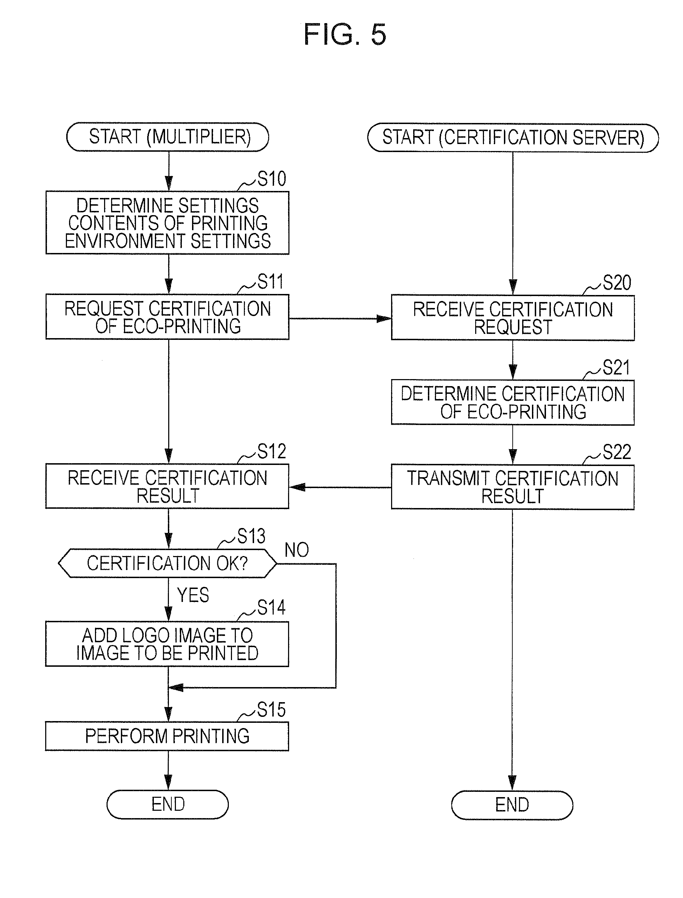

For example, when a printing instruction of the printer function is issued by inputting a printing job to the MFP 3 from the external computer 2, or when a printing instruction according to the copy function, or the like is input by an operation from the operation panel 40, a process of Fig. 5 starts. In step S10, when the process of Fig. 5 starts, the printing environment settings unit 100 of the MFP 3 determines settings contents of printing environment settings according to a user instruction with respect to the MFP 3 or a user instruction with respect to the external computer 2.

Next, in step S11, the certification request unit 110 requests certification of the eco-printing by transmitting a certification request together with settings data of the printing environment settings to the certification server 4.

In a process of the certification server 4 side, when the certification request reception unit 200 receives the certification request from the MFP 3 in step S20, the eco-printing certification unit 210 performs certification determination of the eco-printing with respect to printing according to settings contents of the received settings data with reference to the certification criteria data 221 in step S21. When the printing according to the settings contents of the settings data corresponds to the eco-printing based on the determination result, the printing of settings in which certification is requested is certified as the eco-printing, and when the printing does not correspond to the eco-printing, the printing is not certified as the eco-printing.

Next, in step S22, the certification result transmission unit 230 transmits a certification result to the MFP 3 that is a request source of the certification.

Returning to the process of the MFP 3 side, when the certification result reception unit 120 receives the certification result from the certification server 4 in step S12, the logo image application unit 130 determines whether to receive the certification of the eco-printing in step S13. When certified as the eco-printing in step S13: Yes, the logo image application unit 130 applies a logo image to an image to be printed in step S14, and the printing control unit 140 prints an image to which the logo image is applied by delivering data of an image to which the logo image is applied to the printing engine 30 in step S15.

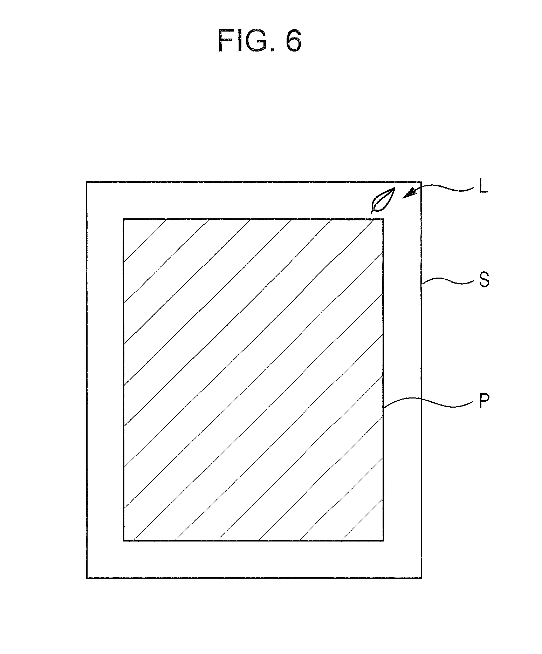

Fig. 6 is a drawing showing an example of a printed result of a logo image. As shown in Fig. 6, on a printing paper S of a printed result, an image P of a printing job to be originally printed and a logo image L are printed. In addition, in an example of Fig. 6, the logo image L is disposed at a position separated on an upper right side with respect to the image P to be printed, but a position of the logo image L is not limited thereto. For example, a header position near an upper center with respect to the image P or a footer position near a lower center may be possible, and a position overlapped with the image P may be possible.

Meanwhile, based on the determination of step S13, when is not certified as the eco-printing in step S13: No, the image P to be printed is printed by delivering data of the image to be printed to the printing engine 30 without applying the logo image L in step S15.

According to the above-described first embodiment, the MFP 3 requests, from the certification server 4, certification whether the printing according to the settings contents concerning the printing environment corresponds to the eco-printing satisfying a predetermined environmental performance, and when the printing is certified as the eco-printing based on the certification result received from the certification server 4, the image P to which the logo image L is applied is printed. Since the MFP 3 requests the certification determination of the eco-printing from the certification server 4, the certification server 4 side is made to correspond with new certification criteria even when the certification criteria are changed, and therefore the MFP 3 side may perform a process corresponding to the new certification criteria with no changes. Due to this, when the certification criteria of the eco-printing are changed, the application image is never erroneously printed in a case of not satisfying an environmental performance of the new certification criteria even though satisfying the criteria before the change. Accordingly, it is possible to accurately provide notification that a printed result is a printed result by the eco-printing satisfying a predetermined environmental performance without the possibility of a case where a user who views the printed matter of the erroneously printed result falsely recognizes that the printed matter of the erroneously printed result is a printed result by the eco-printing, thereby improving the awareness of the user with respect to environmental measures.

In addition, it is possible to promote the use of the eco-printing. For example, it is possible to appeal the fact that a user actively uses the eco-printing by distributing, to third parties, printed matter on which the logo image L is printed as shown in Fig. 6. In addition, when a manager of the MFP 3 is attempt to investigate actual condition of use of the eco-printing, the actual condition of use of the eco-printing can be readily discerned from printed matter of a printed result, thereby easily managing the use of the eco-printing in the MFP or a printer. In addition, when a predetermined mark that is stipulated in organizations to promote environmental protection, third-party certification organizations, or the like is used, it is possible to further appeal the fact that a user themselves actively use the eco-printing. Since these motivations work, the eco-printing may be more actively used.

In addition, for example, when a plurality of multiplier 3 are included in the image processing system 1, a manager or the like of the system does not need to perform an operation for enabling correspondence with the changes in the certification criteria with respect to each of the MFPs 3, and the certification server 4 side is made to correspond with the new certification criteria, and therefore each of the MFPs 3 may perform a process corresponding to the new certification criteria. For this reason, the certification server 4 side is made to correspond with the new certification criteria, thereby reducing burden on the manager.

### Second embodiment

In the above-described first embodiment, the certification server 4 transmits the certification result to the MFP 3, but the certification result and image data of the logo image L may be transmitted to the MFP 3 that is a request source. In the second embodiment, a case in which the image data of the logo image L is stored in a predetermined storage unit (not shown) of the certification server 4, and the certification server 4 transmits the image data of the logo image L in addition to the certification result to the MFP 3 will be described. In addition, hereinafter, the same reference numeral is applied to the same configuration as that in the first embodiment, and thus detailed description thereof will be omitted.

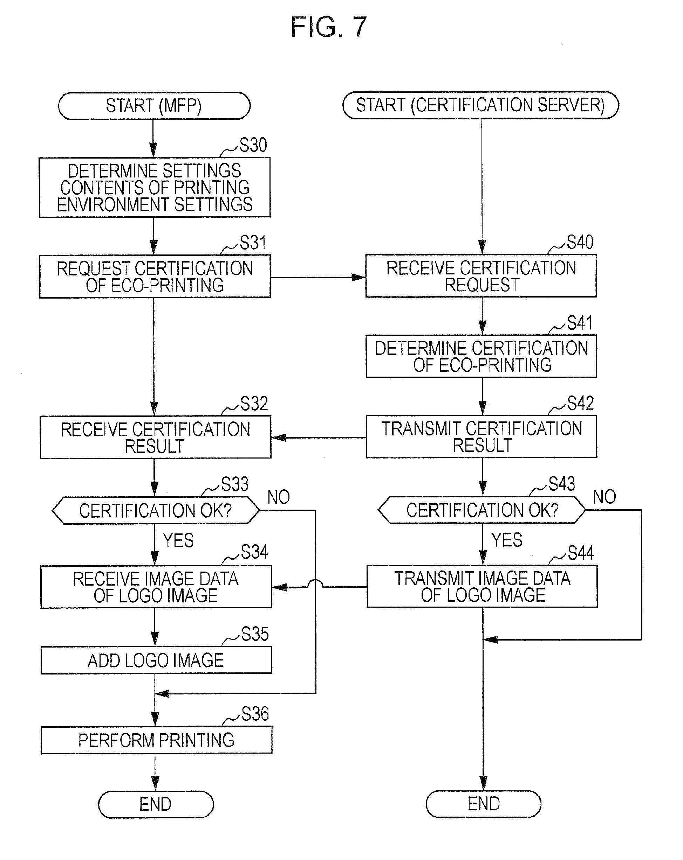

Fig. 7 is a flowchart showing a process of an image processing system according to a second embodiment of the invention. In addition, in the flowchart of Fig. 7, processes of steps S30 to S32 are the same as those of steps S10 to S12 in the first embodiment, and processes of steps S40 to S42 are the same as those of steps S20 to S22 in the first embodiment, and thus detailed description thereof will be omitted.

In processes of the certification server 4 side, when the certification server 4 transmits the certification result to the MFP 3, and then a corresponding printing is certified as the eco-printing in step S43: Yes, the certification result transmission unit 230 transmits the image data of the logo image L to the MFP 3 which is a request source in step S44. When the corresponding printing is not certified as the eco-printing in step S43: No, a process of the certification server 4 side is terminated without transmitting the image data of the logo image L.

Meanwhile, in processes of the MFP 3 side, when the corresponding printing is certified as the eco-printing based on the certification result by the certification server 4 in step S33: Yes, the logo image application unit 130 receives the image data of the logo image L from the certification server 4 in step S34, and applies the logo image L of the image data to the image P to be printed in step S35. Next, in step S36, the printing control unit 140 prints the image P to which the logo image L is applied by delivering, to the printing engine 30, data of the image P to which the logo image L is applied. In addition, based on the determination of step S33, when the corresponding printing is not certified as the eco-printing in step S33: No, the image P to be printed is printed by delivering the data of the image to be printed to the printing engine 30 without applying the logo image L, in step S36.

According to the above-described second embodiment, the MFP 3 prints the image P to which the logo image L is applied, using the image data of the logo image L received from the certification server 4, and therefore the same effects as those of the first embodiment may be obtained. In addition, for example, when a change in a design of the logo image L itself is present accompanying the changes in the certification criteria of the eco-printing, the MFP 3 side may perform eco-printing to which a new logo image L is applied without changing the processes of the MFP 3 side, by enabling the image data of the certification server 4 to correspond to the changes.

### Third embodiment

In the above-described first or second embodiment, in the processes of the MFP 3 side, the logo image L is applied, but the MFP 3 may request the application of the logo image L from the certification server 4. In the third embodiment, a case in which the image data of the logo image L is stored in a storage device of the certification server 4 side, and the certification server 4 side applies the logo image L will be described.

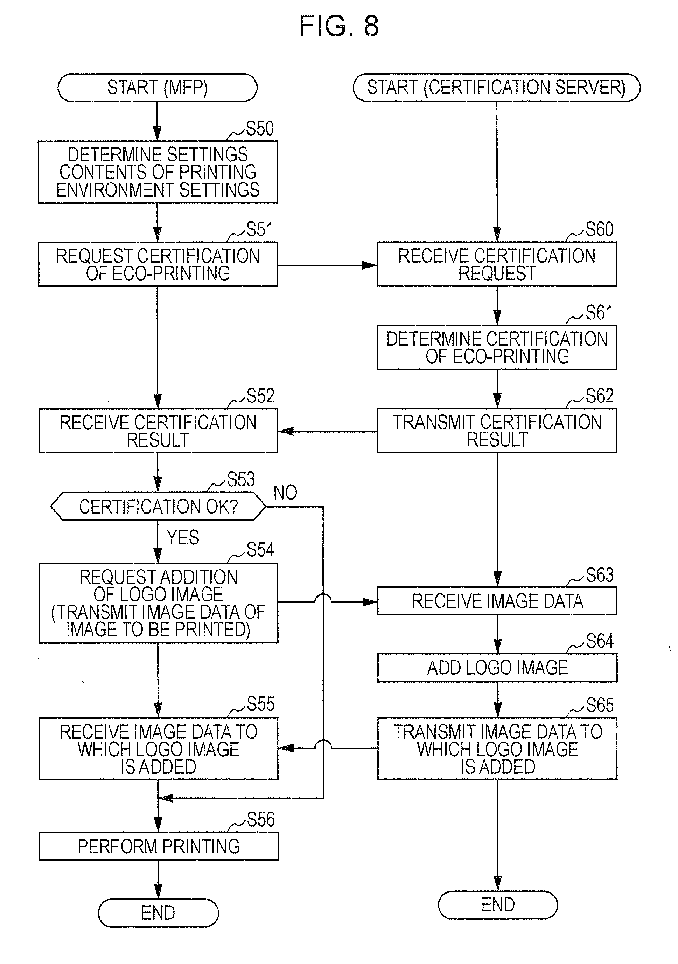

Fig. 8 is a flowchart showing a process of an image processing system according to a third embodiment of the invention. In addition, in the flowchart of Fig. 8, processes of steps S50 to S52 are the same as those of steps S10 to S12 of the first embodiment, and processes of steps S60 to S62 are the same as those of steps S20 to S22 of the first embodiment, and thus detailed description thereof will be omitted.

First, in processes in the MFP 3 side, when a corresponding printing is certified as the eco-printing based on the certification by the certification server 4 in step S53: Yes, the logo image application unit 130 performs a process of applying the logo image L. For this reason, in the present embodiment, the logo image application unit 130 requests the application of the logo image from the certification server 4 by transmitting the image data to be printed to the certification server 4 in step S54.

When receiving the image data in which the application of the logo image is requested in step S63, the certification server 4 applies the logo image L to the image P of the received image data in step S64, and transmits, to the MFP 3 that is a request source, the image data to which the logo image is applied in step S65.

Returning to processes of the MFP 3 side, when the logo image application unit 130 acquires the image data to which the logo image L is applied by receiving the image data to which the logo image L is applied in step S55, the printing control unit 140 prints the image P to which the logo image L is applied by delivering, to the printing engine 30, data of the image P to which the logo image L is applied in step S56.

According to the above-described third embodiment, the MFP 3 requests the application of the logo image L from the certification server 4, and therefore the image P to which the logo image L is applied may be printed according to the image data to which the logo image L is applied, which is received from the certification server 4. Due to this, the same effects as those in the second embodiment may be obtained. In addition, it is possible to reduce burden on the processes of the MFP 3 side.

### Fourth embodiment

In the above-described first to third embodiments, an example in which the MFP 3 that is a printing control apparatus performs processes in order to apply the logo image L has been described, but the logo image L may be applied by a process of the external computer side. In the fourth embodiment, a case in which the logo image L is applied by the process of the external computer will be described.

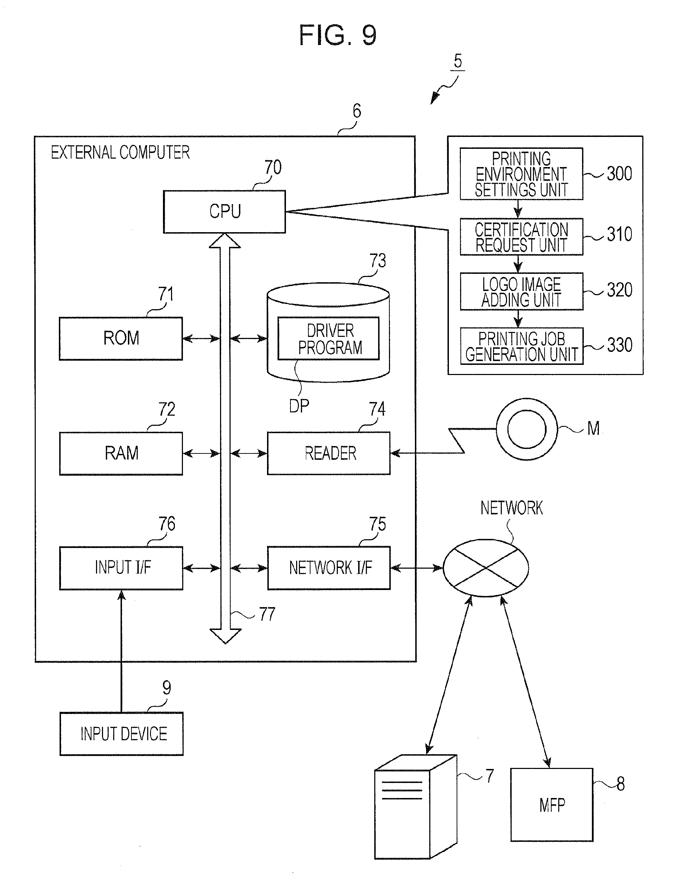

Fig. 9 is a drawing showing a schematic configuration of an image processing system according to a fourth embodiment of the invention. As shown in Fig. 9, an image processing system 5 includes an external computer 6 as a printing control apparatus, a certification server 7, a multifunction peripheral 8, and these devices are respectively connected via a network or the like so as to communicate data with each other.

The external computer 6 is an example of the printing control apparatus, and for example, a general-purpose personal computer in which driver software is installed. The external computer 6 includes a CPU 70, a ROM 71, a RAM 72, a hard disk drive 73, a reading device 74, a network I/F 75, and an input I/F 76. These configurations of the external computer 6 are connected to a bus 77 so as to communicate data via the bus 77.

In the hard disk drive 73, a driver program DP is stored in advance. In addition, the driver program DP is supplied to the external computer 6 in the form of being recorded in a printing medium M, and a program read from the printing medium M by the reading device 74 is stored in the hard disk drive 73. In addition, as examples of the printing medium M, a flexible disk, a magneto-optical disc, a USB memory, a memory card, and the like other than an optical disc such as CD-ROM or DVD-ROM may be given. However, the form in which the drive program DP is supplied to the external computer 6 is not limited thereto, and for example, the drive program DP may be supplied from a predetermined server via a telecommunication line or an optical communication line.

The network I/F 75 is an interface portion that is connected to a network, and performs communication with the MFP 8 via the network.

The input I/F 76 is an interface portion to which an input device 9 such as a mouse or a keyboard is connected.

In addition, the CPU 70 of the external computer 6 reads a driver program DP (printing control program) stored in the hard disk drive 73, and performs the read driver program, and therefore the driver software is installed. Due to this, the external computer 6 becomes a host device of a printer function of the MFP 8, and the CPU 70 of the external computer 6 acts as a printing environment settings unit 300, a certification request unit 310, a logo image application unit 320, and a printing job generation unit 330.

Processes performed by the printing environment settings unit 300, the certification request unit 310, and the logo image application unit 320 are the same as those of the printing environment settings unit 100, the certification request unit 110, and the logo image application unit 130 in any one of the first to third embodiments, and thus detailed description thereof will be omitted.

The printing job generation unit 330 generates a printing job including image data of the image P to which the logo image L is applied and a printing instruction, and transmits the generated printing job to the MFP 8. Due to this, the image P to which the logo image L is applied is printed by the MFP 8.

According to the above-described fourth embodiment, the same effects as those in the first to third embodiments may be obtained by the process of the external computer 6 side.

### Fifth embodiment

In the fifth embodiment, a case in which a printing job and a certification request are transmitted from the external computer to the certification server, the logo image L is applied by the process of the certification server side, and a printing job of the image P to which the logo image L is applied is transmitted to the MFP will be described.

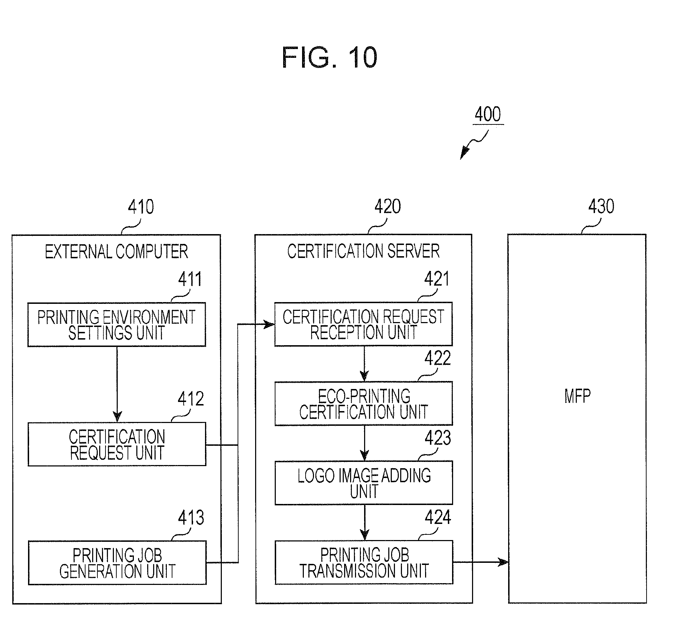

Fig. 10 is a drawing showing a schematic configuration of an image processing system according to a fifth embodiment of the invention. As shown in Fig. 10, an image processing system 400 includes an external computer 410, a certification server 420, and a multifunction peripheral printer 430. The external computer 410 includes a printing environment settings unit 411, a certification request unit 412, and a printing job generation unit 413. The certification server 420 includes a certification request reception unit 421, an eco-printing certification unit 422, a logo image application unit 423, and a printing job transmission unit 424.

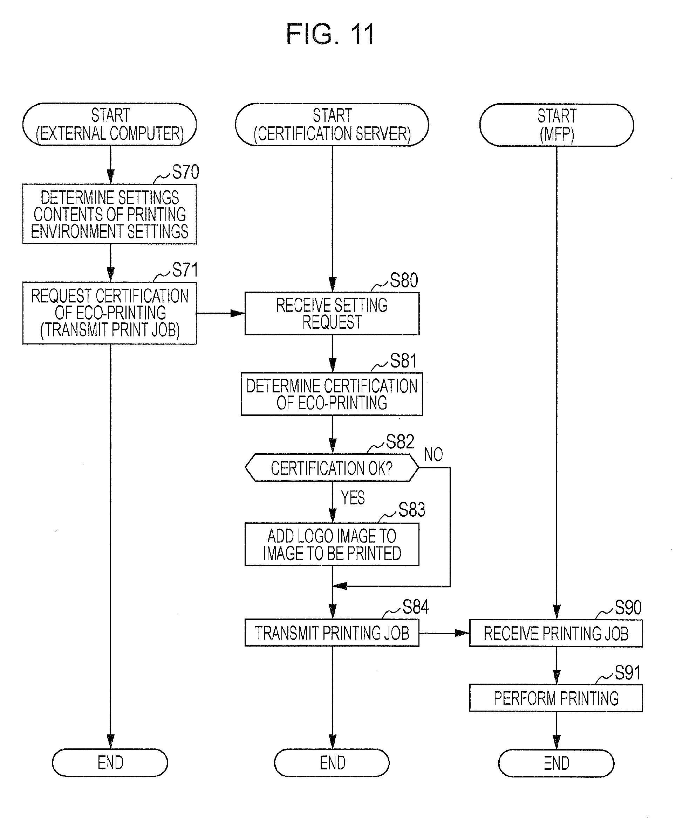

Fig. 11 is a flowchart showing a process of an image processing system according to a fifth embodiment of the invention. In step S71, when a process of Fig. 11 stars, the printing environment settings unit 411 of the external computer 410 determines settings contents of a printing environment settings in step S70, and the certification request unit 412 requests certification of the eco-printing by transmitting, to the certification server 420, the printing job generated by the printing job generation unit 413 and a certification request.

In processes of the certification server 420 side, when the certification request reception unit 421 receives the certification request in step S80, the eco-printing certification unit 422 performs certification determination of the eco-printing in step S81, and when a corresponding printing is certified as the eco-printing in step S82: Yes, the logo image application unit 423 applies the logo image L to the image P of the printing job which is to be printed in step S83, and the printing job transmission unit 424 transmits, to the MFP 430, the printing job of the image P to which the logo image L is applied in step S84. When the corresponding printing is not certified as the eco-printing in step S82: No, the printing job of the image P to which the logo image L is not applied is transmitted to the MFP 430 in step S84.

When receiving the printing job from the certification server 420 in step S90, the MFP 430 executes printing according to the received printing job in step S91.

According to the above-described fifth embodiment, in the image processing system 400 including the external computer 410, the certification server 420, and the MFP 430, the external computer 410 applies the logo image L to the image P by the process in the certification server 410 by transmitting the certification request and the printing job to the certification server 420, and thereby the MFP 430 may printing the image P. Due to this, the same effects as those in the

### third embodiment may be obtained.

As above, the first to fifth embodiments relating to the invention have been described, but the invention is not limited thereto, and the invention may be changed and modified without departing from its sprit and scope of the appended claims and at the same time the equivalent thereof will be included in the invention. Hereinafter, modified examples will be described.

### Modified example 1

In the above-described first to fifth embodiments, to enable a user to recognize that a corresponding printed matter is printed matter by the eco-printing, an image to which the logo image L represented by a predetermined pattern is applied is printed as the application image, but the application image is not limited thereto. For example, an image representing a character string that is printed matter by the eco-printing may be applied as the application image.

### Modified example 2

In the above-described first to fifth embodiments, the MFP as an example of the printing apparatus has been described, but a printer or a facsimile machine as the printing apparatus may be used. In addition, in the above-described embodiments, an example in which electrophotographic printing has been executed has been described, but the printing method is not limited thereto. A configuration using other printing methods such as an ink jet method, a thermal transcription method, or the like may be used.

## Claims

1. A printing control apparatus that controls printing of an image, comprising:
a settings unit that performs settings that contribute to a reduction in environmental load;
a certification request unit that transmits a certification request for requesting certification of environmentally friendly printing satisfying a predetermined environmental performance with respect to printing according to the settings of the settings unit;
a certification result reception unit that receives a certification result corresponding to the certification request;
an application unit that applies, to the image, an application image indicating that printing has been executed by environmentally friendly printing when the printing according to the settings of the settings unit is certified as environmentally friendly printing; and
a printing control unit that performs control of printing an image to which the application image is applied, according to the settings of the settings unit.

2. The printing control apparatus according to Claim 1, wherein the application unit receives image data of the application image when the printing according to the settings of the settings unit is certified as environmentally friendly printing, and applies the application image of the received image data to the image.

3. The printing control apparatus according to Claim 1, wherein the application unit requests application of the application image by transmitting the image data of the image to a certification request destination, and receives the image data of an image to which the application image is applied according to the request of the application of the application image.

4. A certification server, comprising:
a certification request reception unit that receives a certification request for requesting certification of environmentally friendly printing satisfying a predetermined environmental performance with respect to printing in which settings contributing to a reduction in environmental load is designated;
a storage unit that stores certification criteria data for regulating certification criteria of environmentally friendly printing;
a certification unit that determines whether printing according to the designated settings corresponds to environmentally friendly printing, based on the certification criteria data, and certifies the printing according to the designated settings as environmentally friendly printing when the printing according to the designated settings corresponds to environmentally friendly printing; and
a certification result transmission unit that transmits a certification result obtained by the certification unit.

5. The certification server according to Claim 4, wherein the certification criteria data is updatable.

6. An image processing system, comprising:
a printing control apparatus that controls printing of an image; and
a certification server that performs certification of environmentally friendly printing satisfying a predetermined environmental performance,
wherein the printing control apparatus includes
a settings unit that performs settings that contribute to a reduction in environmental load,
a certification request unit that transmits, to the certification server, a certification request for requesting certification of environmentally friendly printing with respect to printing according to the settings of the settings unit,
a certification result reception unit that receives a certification result corresponding to the certification request from the certification server,
an application unit that applies, to the image, an application image indicating that printing has been executed by environmentally friendly printing when the printing according to the settings of the settings unit is certified as environmentally friendly printing, and
a printing control unit that performs control of printing an image to which the application image is applied, according to the settings of the settings unit, and
wherein the certification server includes
a certification request reception unit that receives the certification request from the printing control apparatus,
a storage unit that stores certification criteria data for regulating certification criteria of environmentally friendly printing,
a certification unit that determines whether printing according to the designated settings corresponds to environmentally friendly printing, based on the certification criteria data, and certifies the printing according to the designated settings as environmentally friendly printing when the printing according to the designated settings corresponds to environmentally friendly printing, and
a certification result transmission unit that transmits a certification result obtained by the certification unit to the printing control apparatus.

7. An image processing system, comprising:
a printing apparatus;
a printing control apparatus that controls printing of an image by the printing apparatus; and
a certification server that performs certification of environmentally friendly printing satisfying a predetermined environmental performance,
wherein the printing control apparatus includes
a settings unit that performs settings that contribute to a reduction in environmental load, and
a certification request unit that transmits, to the certification server, a certification request for requesting certification of environmentally friendly printing and a printing operation of the image with respect to printing according to the settings of the settings unit, and
wherein the certification server includes
a certification request reception unit that receives the certification request from the printing control apparatus,
a storage unit that stores certification criteria data for regulating certification criteria of environmentally friendly printing,
a certification unit that determines whether printing according to the designated settings corresponds to environmentally friendly printing, based on the certification criteria data, and certifies the printing according to the designated settings as environmentally friendly printing when the printing according to the designated settings corresponds to environmentally friendly printing,
an application unit that applies, to the image, an application image indicating that printing has been executed by environmentally friendly printing when the printing according to the settings of the settings unit is certified as environmentally friendly printing, and
a transmission unit that transmits, to the printing apparatus, the printing operation of an image to which the application image is applied.

8. A printing control method that controls printing of an image, comprising:
performing settings that contribute to a reduction in environmental load;
transmitting a certification request for requesting certification of environmentally friendly printing satisfying a predetermined environmental performance with respect to printing according to the settings of the settings unit;
receiving a certification result corresponding to the certification request;
applying, to the image, an application image indicating that printing has been executed by environmentally friendly printing when the printing according to the settings of the settings unit is certified as environmentally friendly printing; and
performing control of printing an image to which the application image is applied, according to the settings contributing to the reduction in the environmental load.

9. A printing control program for controlling printing of an image, enabling a computer to function as:
a settings unit that performs settings that contribute to a reduction in environmental load;
a certification request unit that transmits a certification request for requesting certification of environmentally friendly printing satisfying a predetermined environmental performance with respect to printing according to the settings of the settings unit;
a certification result reception unit that receives a certification result corresponding to the certification request;
an application unit that applies, to the image, an application image indicating that printing has been executed by environmentally friendly printing when the printing according to the settings of the settings unit is certified as environmentally friendly printing; and
a printing control unit that performs control of printing an image to which the application image is applied, according to the settings of the settings unit.
